# EUROPEAN PATENT APPLICATION

(11) **EP 4 506 845 A2**
(43) Date of publication of application: **12.02.2025**
(21) Application number: 24191337.5
(22) Date of filing: 29.07.2024
(51) Int. Cl.: G06F 21/60, G06F 21/76, G06F 30/34, H04L 9/08, H04L 9/32, H04L 9/40, H04L 67/10

(54) **ZERO-TRUST END-USER SOLUTION FOR FPGA-BASED CLOUD ARCHITECTURE**

(30) Priority: 07.08.2023 FI 20235874
(71) Applicant: Nokia Solutions and Networks Oy, 02610 Espoo (FI)
(72) Inventor: INCE, Semih, Lannion (FR); SANTORO, Renaud, Lannion (FR); LALLET, Julien, Lannion (FR); ESPES, David, Ploudaniel (FR); GOGNIAT, Guy, Nostang (FR)
(74) Representative: Nokia EPO representatives

(57) **Abstract**

A hardware device (200) comprising an accelerator enclave (230) and a hardware security module (210), HSM, the HSM (210) including a first true random number generator, TRNG (211). The accelerator enclave (230) includes a second TRNG (231) and an accelerator (235). The HSM (210) is configured to: generate a first session key using the first TRNG (211); establish a first secure communication channel (CH1) with a cloud user using the first session key; receive an encrypted hardware configuration bitstream through the first secure communication channel (CH1); decrypt the hardware configuration bitstream; configure functional blocks in the at least one accelerator based on the hardware configuration bitstream. The accelerator enclave (230) is configured to: generate a second session key using the second TRNG (231); establish a second secure communication channel (CH2) with the cloud user using the second session key as encryption key; receive encrypted input data through the second secure communication channel (CH2); decrypt the encrypted input data; process the input data using the functional blocks.

## Description

### TECHNICAL FIELD

Various example embodiments relate generally to a hardware device, an apparatus of a cloud user, an apparatus of a cloud provider and corresponding methods for implementing a zero-trust end-user solution for hardware-based cloud architecture.

### BACKGROUND

Cloud computing solutions and environments are in high demand due to the rising computational complexity of applications such as AI/ML and telecommunications. Public cloud solutions allow users to take advantage of ready to use and flexible cloud acceleration environments. Users aim to meet their performance requirements and offer great quality of service for their solution.

Several type of hardware resources may be used in a cloud computing environment: CPU (Central Processing Unit), GPU (Graphical Processing Unit), FPGA (Field programmable gate array), ASIC (Application Specific Integrated Circuit) or more generally SoC (Systems on Chip) that designate any type of integrated circuit (IC) design that combines many or all high-level function elements of an electronic device onto a single chip.

FPGA-based cloud acceleration is one possible solution to reach performance requirements. An FPGA is a reprogrammable hardware device that has great parallelization and pipeline capabilities. Thanks to their performance and power consumption efficiency, FPGAs are more efficient compared to general purpose CPU and GPU. Consequently, FPGAs are highly relevant for cloud-based accelerators. Their flexibility allows versatility, reconfiguration and to speed-up a diversity of accelerated functions. FPGAs are nowadays easier to use. High-Level Synthesis (HLS) tools bring FPGA capabilities to SW designers.

FPGAs are deployed in the cloud and associated development kits are provided by the Cloud Provider (CP) to the cloud users. The cloud users may use the provided interfaces to the FPGA and follow the workflow provided by the CP.

However FPGAs do not have standard architectures and tools and FPGA manufacturers may use different libraries and development environments to design and configure the FPGA. The lack of a standardization in FPGA makes security more challenging because the security solutions are specific to a FPGA vendor. In FPGAs, functional blocks are often called IP core (Intellectual Property). An IP core is a functional block of logic (e.g. RAN core, LDPC function...) which can be configured and used through inputs and outputs as an API in the software world. An IP core can be shared or private, retrieved from a marketplace to speed-up FPGA design, or realized through in-house design.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a hardware device comprises an accelerator enclave and a hardware security module, HSM, the HSM including a first true random number generator, TRNG; the accelerator enclave including a second TRNG and at least one accelerator; the HSM being configured to: generate a first session key using the first TRNG; establish a first secure communication channel with a cloud user using the first session key as encryption key; receive an encrypted hardware configuration bitstream through the first secure communication channel; decrypt the hardware configuration bitstream; configure functional blocks in the at least one accelerator based on the hardware configuration bitstream; the accelerator enclave being configured to: generate a second session key using the second TRNG; establish a second secure communication channel with the cloud user using the second session key as encryption key; receive encrypted input data through the second secure communication channel; decrypt the encrypted input data; process the input data using the functional blocks; send, through the second secure communication channel, encrypted output data generated by the functional blocks based on the encrypted input data.

The HSM may be configured to: receive an encrypted access token defining authorizations granted by a cloud provider to the cloud user with respect to the functional blocks in the at least one accelerator; decrypt the encrypted access token; initialize the functional blocks based on the authorizations defined in the access token.

To establish the first secure communication channel the HSM may be configured to: encrypt the first session key with a public key associated with the cloud user to generate a first encrypted key; generate a first signature of the first encrypted key; send the first encrypted key and the first signature to the cloud user.

To establish the second secure communication channel the accelerator enclave is configured to: encrypt the second session key with the public key associated with the cloud user to generate a second encrypted key; generate a second signature of the second encrypted key; send the second encrypted key and the second signature to the cloud user.

According to another aspect a method concerning a hardware device is disclosed. The hardware device comprises an accelerator enclave and a hardware security module, HSM, the HSM including a first true random number generator, TRNG; the accelerator enclave including a second TRNG and at least one accelerator. The method comprises: generating, by the HSM, a first session key using the first TRNG; establishing, by the HSM, a first secure communication channel with a cloud user using the first session key as encryption key; receiving, by the HSM, an encrypted hardware configuration bitstream through the first secure communication channel; decrypting, by the HSM, the hardware configuration bitstream; configuring, by the HSM, functional blocks in the at least one accelerator based on the hardware configuration bitstream; generating, by the accelerator enclave, a second session key using the second TRNG; establishing, by the accelerator enclave, a second secure communication channel with the cloud user using the second session key as encryption key; receiving, by the accelerator enclave, encrypted input data through the second secure communication channel; decrypting, by the accelerator enclave, the encrypted input data; process the input data using the functional blocks; sending, by the accelerator enclave, through the second secure communication channel, encrypted output data generated by the functional blocks based on the encrypted input data.

According to a second aspect, an apparatus for use by a cloud user is disclosed. The apparatus comprises means for: establishing a first secure communication channel with a hardware security module in a hardware device in a cloud using a first session key as encryption key; sending an encrypted hardware configuration bitstream through the first secure communication channel, the hardware configuration bitstream being adapted to configure functional blocks in at least one accelerator in an accelerator enclave in the hardware device; establishing a second secure communication channel with the accelerator enclave in the hardware device; sending encrypted input data to be processed using the functional blocks through the second secure communication channel; receiving, through the second secure communication channel, encrypted output data generated by the functional blocks based on the encrypted input data.

The apparatus may comprise means for performing a mutual authentication with the hardware device, wherein the first secure communication channel is established if the mutual authentication with the hardware device is successful.

The apparatus may comprise means for sending to the hardware security module an encrypted access token defining authorizations granted to the cloud user with respect to the functional blocks in the at least one accelerator.

The apparatus may comprise means for: sending to a cloud provider a certificate of the cloud user and a request for hardware resources; receiving the certificate signed by the cloud provider; performing a mutual authentication with the trusted authority; receiving the access token from the trusted authority and a signature of the access token generated by the trusted authority using a secret shared between the trusted authority and the hardware security module of the hardware device.

The access token may include the public key of the cloud user, the authorizations granted by the cloud provider to the cloud user and a public key of the hardware device.

The means for establishing the first secure communication may comprise means for: receiving a first encrypted key encrypting the first session key and a first signature of the first encrypted key; decrypting the first encrypted key using a private key associated with the cloud user to obtain the first session key; verifying the first signature using the decrypted first session key.

The means for establishing the second secure communication may comprise means for: receiving a second encrypted key encrypting the second session key and a second signature of the second encrypted key; decrypting the second encrypted key using a private key associated with the cloud user to obtain the second session key; verifying the second signature using the decrypted second session key.

The means of the apparatus according to the second aspect may include circuitry configured to perform one or more or all functions defined for the apparatus. The means may include at least one processor and at least one memory storing instructions that, when executed by the at least one processor, cause the apparatus to perform one or more or all functions defined for the apparatus.

According to another aspect concerning a cloud user, a method comprises: establishing a first secure communication channel with a hardware security module in a hardware device in a cloud using a first session key as encryption key; sending an encrypted hardware configuration bitstream through the first secure communication channel, the hardware configuration bitstream being adapted to configure functional blocks in at least one accelerator in an accelerator enclave in the hardware device; establishing a second secure communication channel with the accelerator enclave in the hardware device; sending encrypted input data to be processed using the functional blocks through the second secure communication channel; receiving, through the second secure communication channel, encrypted output data generated by the functional blocks based on the encrypted input data.

The method may comprise: performing a mutual authentication with the hardware device, wherein the first secure communication channel is established if the mutual authentication with the hardware device is successful.

The method may comprise: sending to the hardware security module an encrypted access token defining authorizations granted to the cloud user with respect to the functional blocks in the at least one accelerator.

The method may comprise: sending to a cloud provider a certificate of the cloud user and a request for hardware resources; receiving the certificate signed by the cloud provider; performing a mutual authentication with the trusted authority; receiving the access token from the trusted authority and a signature of the access token generated by the trusted authority using a secret (FSS) shared between the trusted authority and the hardware security module of the hardware device.

The access token may include the public key of the cloud user, the authorizations granted by the cloud provider to the cloud user and a public key of the hardware device.

Establishing the first secure communication may comprise: receiving a first encrypted key encrypting the first session key and a first signature of the first encrypted key; decrypting the first encrypted key using a private key associated with the cloud user to obtain the first session key; verifying the first signature using the decrypted first session key.

Establishing the second secure communication may comprise: receiving a second encrypted key encrypting the second session key and a second signature of the second encrypted key; decrypting the second encrypted key using a private key associated with the cloud user to obtain the second session key; verifying the second signature using the decrypted second session key.

According to another aspect concerning a cloud user, a non-transitory computer readable medium comprises program instructions stored thereon for causing an apparatus to perform at least the following: establishing a first secure communication channel with a hardware security module in a hardware device in a cloud using a first session key as encryption key; sending an encrypted hardware configuration bitstream through the first secure communication channel, the hardware configuration bitstream being adapted to configure functional blocks in at least one accelerator in an accelerator enclave in the hardware device; establishing a second secure communication channel with the accelerator enclave in the hardware device; sending encrypted input data to be processed using the functional blocks through the second secure communication channel; receiving, through the second secure communication channel, encrypted output data generated by the functional blocks based on the encrypted input data.

According to a third aspect, an apparatus of a cloud provider is disclosed. The apparatus comprises means for: receiving, from a cloud user, a certificate of the cloud user and a request for hardware resources; signing the certificate of the cloud user; sending, to the cloud user, the certificate signed by the cloud provider; sending, to a trusted authority, authorizations granted to the cloud user based on the request and the certificate signed by the cloud provider; redirecting the cloud user to the trusted authority.

The means of the apparatus according to the third aspect may include circuitry configured to perform one or more or all functions defined for the apparatus. The means may include at least one processor and at least one memory storing instructions that, when executed by the at least one processor, cause the apparatus to perform one or more or all functions defined for the apparatus.

According to another aspect concerning a cloud provider, a method comprises: receiving, from a cloud user, a certificate of the cloud user and a request for hardware resources; signing the certificate of the cloud user; sending, to the cloud user, the certificate signed by the cloud provider; sending, to a trusted authority, authorizations granted to the cloud user based on the request and the certificate signed by the cloud provider; redirecting the cloud user to the trusted authority.

According to another aspect concerning a cloud provider, a non-transitory computer readable medium comprises program instructions stored thereon for causing an apparatus to perform at least the following: receiving, from a cloud user, a certificate of the cloud user and a request for hardware resources; signing the certificate of the cloud user; sending, to the cloud user, the certificate signed by the cloud provider; sending, to a trusted authority, authorizations granted to the cloud user based on the request and the certificate signed by the cloud provider; redirecting the cloud user to the trusted authority.

According to a fourth aspect, an apparatus for use by a trusted authority is disclosed. The apparatus comprises means for: installing a certificate of a hardware device in a hardware security module of the hardware device, wherein the hardware device is deployed in a cloud managed by a cloud provider; storing the certificate of the hardware device in association with a hardware device identifier; performing a mutual authentication with a cloud user; receiving, from the cloud provider, the hardware device identifier and authorizations granted to the cloud user; sending, to the cloud user, an access token including the authorizations and a signature of the access token generated by the trusted authority using a secret (FSS) shared between the trusted authority and the hardware security module of the hardware device.

The means of the apparatus according to the fourth aspect may include circuitry configured to perform one or more or all functions defined for the apparatus. The means may include at least one processor and at least one memory storing instructions that, when executed by the at least one processor, cause the apparatus to perform one or more or all functions defined for the apparatus.

According to another aspect concerning a trusted authority, a method may comprise: installing a certificate of a hardware device in a hardware security module of the hardware device, wherein the hardware device is deployed in a cloud managed by a cloud provider; storing the certificate of the hardware device in association with a hardware device identifier; performing a mutual authentication with a cloud user; receiving, from the cloud provider, the hardware device identifier and authorizations granted to the cloud user; sending, to the cloud user, an access token including the authorizations and a signature of the access token generated by the trusted authority using a secret shared between the trusted authority and the hardware security module of the hardware device.

According to another aspect concerning a trusted authority, a non-transitory computer readable medium comprises program instructions stored thereon for causing an apparatus to perform at least the following: installing a certificate of a hardware device in a hardware security module of the hardware device, wherein the hardware device is deployed in a cloud managed by a cloud provider; storing the certificate of the hardware device in association with a hardware device identifier; performing a mutual authentication with a cloud user; receiving, from the cloud provider, the hardware device identifier and authorizations granted to the cloud user; sending, to the cloud user, an access token including the authorizations and a signature of the access token generated by the trusted authority using a secret shared between the trusted authority and the hardware security module of the hardware device.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 illustrates an architecture of the hardware security management in O-RAN and the Open Cloud platform according to embodiments.
FIG. 2 illustrates a security framework for using a hardware device deployed in a cloud according to embodiments.
FIG. 3 shows a flowchart of a method for deploying a certificate for a hardware device in a cloud according to embodiments.
FIG. 4 shows a flowchart of a method for access token generation for a hardware device in a cloud according to embodiments.
FIG. 5 shows a flowchart of a method for use of a target hardware device in a cloud according to embodiments.
FIG. 6 illustrates aspect of a security protocol for use of a hardware device in a cloud according to embodiments.
FIG. 7 illustrates aspect of a security protocol for use of a hardware device deployed in a cloud according to embodiments.
FIG. 8 illustrates a software/hardware architecture of a hardware device deployed in a cloud according to embodiments.
FIG. 9 shows a flowchart of a method for implementing a security protocol according to one or more example embodiments.
FIG. 10 shows a flowchart of a method for implementing a security protocol according to one or more example embodiments.
FIG. 11 shows a flowchart of a method for implementing a security protocol according to one or more example embodiments.
FIG. 12 shows a flowchart of a method for implementing a security protocol according to one or more example embodiments.
FIG. 13 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

Security and privacy concerns have been identified in existing public cloud environments and workflows. For example, a cloud user may need privacy and security when using public cloud solutions. The cloud user may need to protect valuable data and the hardware configuration bitstreams (e.g. the hardware configuration bitstreams may include bitstreams for configuring functional blocks in the accelerator of the FPGAs and /or a data to be processed by the accelerator of the hardware device) while using third party acceleration resources and environments.

In this context a cloud user may be any communicating entity (e.g., NIC card, any specific module in the cloud, user equipment, another stakeholder etc.) and will be simply referred to herein as the user or cloud user.

From a public cloud user's perspective, the CP (Cloud Provider) may have undesired privileges over the cloud environment and the shared resources. Currently, some existing solutions and methods deployed by the CPs are considered invasive for cloud users. For example, cloud users must use proprietary methods provided by the CP. These proprietary methods are not open-source, and cannot be verified or trusted by the user.

For example, the CP may need to verify the cloud user's hardware configuration bitstream to check for malicious and harmful design towards his infrastructure and hardware. This verification process does not allow to preserve the confidentiality of the hardware configuration bitstream.

In fact, for using hardware resources like FPGA, the CP may require the cloud user to disclose the accelerator design netlist of the FPGA. In the netlist, the connections of each instantiated block of the FPGA are described. The netlist is encrypted during transport between the cloud user and the CP. However, the netlist verification is executed on plaintext data. The CP may reverse engineer the cloud user's netlist and steal proprietary IPs. This is harmful for the cloud user's data privacy.

Additionally, the CP deploys a custom FPGA shell to provide users with external memories, features, and custom interfaces for communication purposes. User functional blocs configured inside the accelerator are connected to the CP's interfaces inside the FPGA to be able to establish communication with the hardware resources of the FPGA, send commands and use the hardware acceleration environment as intended.

The FPGA shell has master and slave interfaces with the user functional blocks configured by a user based on a hardware configuration bitstream (these user function blocks are sometimes referred to as the "user IP"). Consequently, the FPGA shell may initiate unauthorized communication with the user functional blocks to retrieve valuable information (e.g. IP valuable information). This is possible because the communication with the user /*IP*/ functional blocks is not authenticated. The CP can intercept data going through these interfaces if the cloud user cannot implement any encryption logic independently from the CP. As a result, the cloud user's privacy on the user functional blocks, hardware configuration bitstream and input / output data can be compromised.

A cloud user cannot simply implement cryptographic functions and protect user's data. It is not secure to embed any secret (e.g., an encryption key) inside an accelerator because cloud providers have methods to retrieve plaintext information at various levels (e.g., device reconfiguration, device shell etc.). Because the CP cannot be trusted, there is a need to guarantee the confidentiality of data of the cloud user without relying on mechanisms provided by the CP. The cloud provider has privileges over the deployed hardware. The FPGA shell and interfaces should be considered as a vulnerability for the user, and security measures appear necessary.

For example, a cloud end-user should be able to:
- Protect his data without using any third-party interface, software, or tool set up by the cloud provider inside the hardware resource;
- Ensure using a zero-trust network architecture;
- Protect data confidentiality and create isolation against the CP.

A solution is proposed that ensures isolation between end-user, CP, and hardware configuration bitstream and / or user application. The solution will be described and illustrated in the context of a use case in telecom domain.

In the following, different exemplary embodiments will be described using, as an example of an access architecture to which the exemplary embodiments may be applied, a radio access architecture based on long term evolution advanced (LTE Advanced, LTE-A) or new radio (NR, 5G), without restricting the exemplary embodiments to such an architecture.

Generally the embodiments disclosed therein may be used for various radio telecommunication systems, including a fifth generation (5G) network or 6G network. Prior or subsequent generations of radio telecommunication systems may be concerned as disclosed herein.

Cloud providers will be central component of 5G Open RAN (O-RAN) architectures. 5G continues to evolve, enabling new network solution. O-RAN is one of the biggest 5G evolution, expanding ecosystem of mobile phones and RAN players in 5G network market. Opening interfaces between 5G network elements allows multi-vendor interoperability. As a result, multi-vendor 5G network solutions, in different network domains (RAN, Core Network (CN)) will be built by telecommunications operators.

To reach latency and performance constraints for 5G O-RAN networks, hardware accelerators (e.g., using GPU, Field-Programmable Gate Arrays (FPGA), etc) are embedded in the different O-RAN network elements. Hardware accelerators allow to reduce number of required CPU cores, especially for L1 processing and compute-intensive workloads (AI/ML, cryptography applications, etc.). Hardware accelerators can use different hardware resources, including FPGA, ASIC and GPU. Originally embedded to accelerate AI/ML applications, FPGA are relevant candidate execution platforms for O-RAN.

Compared to on-premises network solution, in which an operator has its private network, O-RAN openness enables innovation acceleration. O-RAN can use shared network, including commercial cloud environment. O-RAN brings new security challenges, which is critical in 5G networks. O-RAN Security Work Group (or WG11) has been created to ensure O-RAN system security. O-RAN WG11 security requirements are presented in [2]. O-RAN security threat modeling and remediation analysis are highlighted in [1]. Risk assessment from Table 7-2 in [1] presents the O-RAN risks, impact, severity, and likelihood level. Several threats are linked to hardware accelerator usage.

FPGA usage in O-RAN context is similar to FPGA-cloud computing solutions. FPGA is used in cloud environment network, sharing their resources between end-users (operators) and evolving as a function of time (through reconfiguration).

One of critical issue linked to FPGA or other hardware resources usage in cloud context is the lack of integrity solutions to ensure security.

It is proposed to provide a solution that provides data protection and confidentiality in accelerated cloud environment, for example in O-RAN FPGA accelerated cloud context. For example, with FPGA accelerators inside cloud environment, the end user expects security and confidentiality. O-RAN based network generally accesses accelerator capabilities through a Cloud Provider (CP).

As already discussed, in this scheme, security limitation currently exists. CP can access exchanged data between end-user and accelerator. No encryption is realized between the hardware accelerator and other entities inside the cloud infrastructure. The interfaces to hardware accelerators are not encrypted. Applications and the hardware accelerator manager are sending and receiving plaintext data from the accelerators. This is not specific to O-RAN : in public clouds, the data coming in and going out of the hardware accelerators are exposed. Cloud providers deploy for example FPGA by developing their custom software and hardware layer. These layers can include monitoring, management, and logging mechanisms, a logic hardware shell. The shell implements management and application functions (e.g., PCI communication and OpenCL API calls are handled by the shell). Because of a lack of transparency, the whereabouts of the cloud provider are unknown. The cloud end-user does not have any mechanism to verify the confidentiality and the security of his acceleration environment.

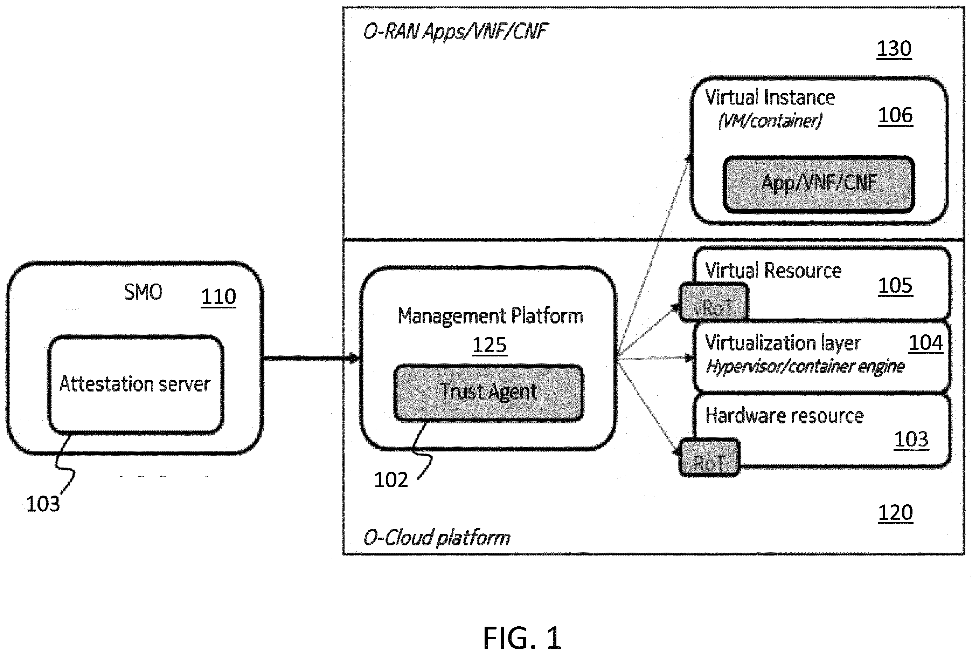

An overview of the hardware security management in O-RAN and the Open Cloud (i.e., O-Cloud) platform is illustrated by FIG. 1.

O-Cloud is an open cloud environment where virtual instances 106 may be deployed: for example, applications (i.e., App), Virtual Network Functions (i.e., VNF) and Containerized Network Function (i.e., CNF).

In O-RAN, trust policies for applications and VNFs are defined in the attestation server (i.e., AS) 101 by system administrators (i.e. "admins"). The attestation server 101 may be in the SMO (Service Management and Orchestration) 110. Attestations are produced for each module by the AS using the policies described earlier. Attestations are deployed for various modules inside the O-Cloud. These attestations describe each module's authorization and capability.

A management platform 125 is present in the O-Cloud in which a trust agent 102 is deployed. Measurements of the Root-of-trust (i.e., RoT) and virtual RoT (i.e., vRoT) may be periodically collected. A RoT is a form of embedded trust inside the hardware like the firmware version, hash values of software or engraved device keys. In O-RAN security requirements, the chain of trust starts from the hardware logic in the hardware resources 103 and chain of attestation is formed with virtualization layer 104 and the App/VNF/CNF layer 106 through the virtualization layer 105. If one layer of the attestation chain is corrupted, then the whole system is considered untrusted and corrupted. If the chain of trust measurements is not valid when verified in the attestation server, the RoT is reestablished to secure the system. This protects the O-Cloud against tampering and rogue behavior.

One drawback is here the lack of data confidentiality between the lower hardware resources 103 (e.g. the hardware accelerators) and upper layers 104, 105, 106. The communication channels with the hardware resources are not secured. Consequently, the virtualization layer 104 and the virtual machine may retrieve information from the hardware accelerators 103 and the virtual resource 105. They may for example create logs and spy on the ongoing application/VNF/CNF. This can be done without tampering the chain of trust. Hence, the measurements are not modified, and no flags are raised by the attestation server 103.

Thus there is a security limitation as data confidentiality of communications between the lower hardware resources 103 and other modules is not ensured.

A zero-trust end-user solution for FPGA-based cloud architecture in O-RAN context is disclosed herein that enables isolation between end-user, cloud provider (CP), and hardware resources like hardware accelerators.

Zero-trust solution or model or process means herein that the Cloud Provider or more generally the cloud environment does not need to be trusted. Such zero-trust solutions ensure minimal exposure to entities to establish a secure acceleration environment. A zero-trust model may reinforce cloud user confidentiality and privacy. The model provides better security, requiring less exposure to TTP and cloud provider.

As an example, in FPGA accelerated cloud computing, the cloud providers cannot be trusted because the cloud providers have physical access to the cloud infrastructure. CP can deploy malicious tools to spy cloud users. The cloud provider owns the hardware and the acceleration environment. This gives many privileges over the hardware that is shared with cloud users. The cloud provider has tools to compromise the cloud user's data and confidentiality. The software and the solutions deployed in the cloud infrastructure can be used to interfere with the cloud user's computation and operation. In FPGA, cloud user uses hardware configuration bitstream for configuring functional block(s) (e.g. logical blocks) of hardware accelerators.

The cloud user may need to establish authenticated and encrypted communication for the hardware configuration bitstream deployed inside a FPGA-accelerated cloud environment without using third-party interfaces or software. The cloud user may need input / output data protection and hardware configuration bitstream protection from the cloud provider to protect his interests. To ensure that the user and the hardware configuration bitstream deployed inside the FPGA, an authenticated and encrypted channel is provided. The encryption keys and algorithms are deployed independently from the cloud provider to ensure isolation and minimize the exposure. Additionally, access control rules may be established and enforced to control the access of a cloud user to target functional blocks in the accelerator. The cloud user is the only entity that can access his functional blocks. The security mechanisms are implemented such that the cloud provider has not the capacity to modify the rules and interfere with a user acceleration session.

As a hardware resource (e.g. FPGA) is integrated in the cloud environment, we assume that the cloud environment is untrusted. Consequently, any information that goes outside the hardware accelerator is encrypted to ensure data confidentiality. To protect the encryption key against the cloud provider, the encryption key may be encrypted with the public key corresponding to the communicating entity.

In this threat model, the attacker's objective is to break the confidentiality of the data processed inside the hardware resource (e.g. FPGA). We assume that the adversary has physical access to the hardware resource (e.g. FPGA) and any memory that the data owner has access can be compromised. We assume that the CP and the TTP may be malicious. Thus, solutions, protocols and software provided by these entities (except the HSM) may be malicious and protection is required. For example, any FPGA shell or interface provided to the user functional blocks by the CP may be considered untrusted. We assume that the shell is able to log and store communications and data belonging to the cloud user. Although the CP and the TTP may be both considered malicious, the CP and the TTP do not cooperate to compromise the cloud user's data. However, the CP is not interested in Denial-of-Service (i.e., DoS) attacks and attacks that would damage the CP infrastructure.

For hardware resources like FPGA, the FPGA fabric does not have an operating system or a runtime environment. Thus, software-based attack vectors are not valid in this context. The cloud provider cannot predict and access the random key generated in the FPGA because the cloud provider will not have interfaces with elements responsible of the secure channel establishment.

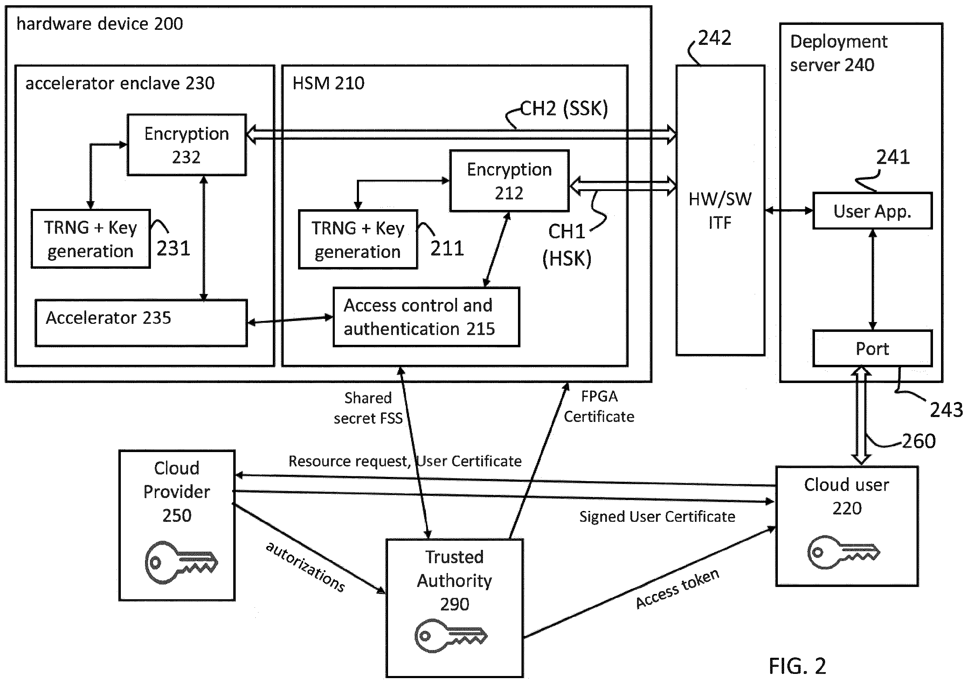

FIG. 2 illustrates an authentication and access delegation framework for using a target hardware device deployed in a cloud and describes the software/hardware architecture of the target hardware device (e.g. FPGA) 200. This architecture is used to implement several security mechanisms, also referred to herein as the security protocol.

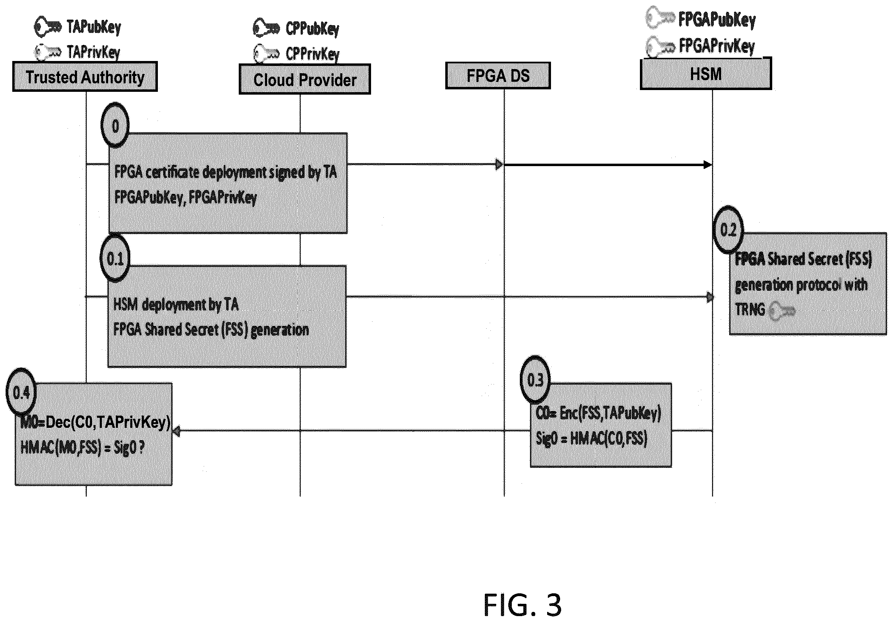

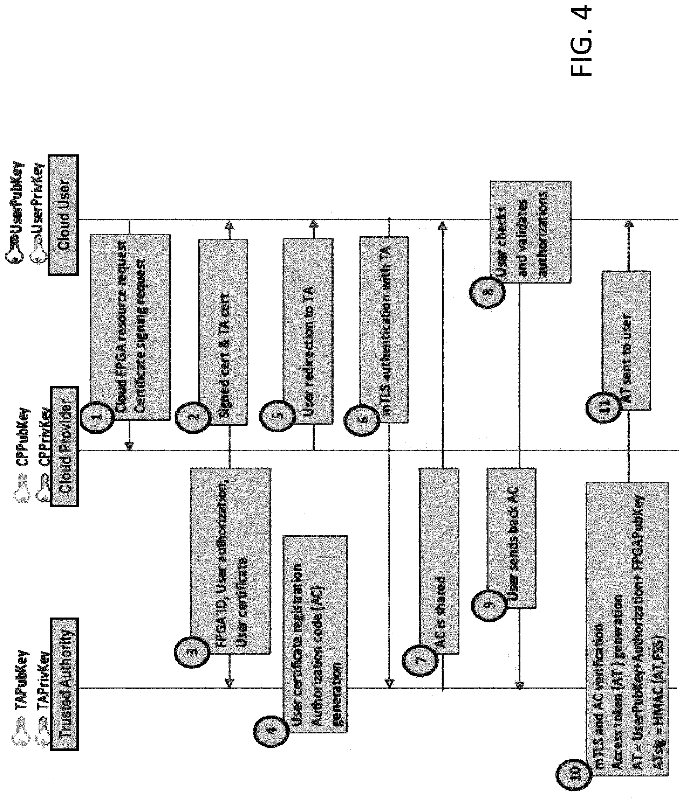

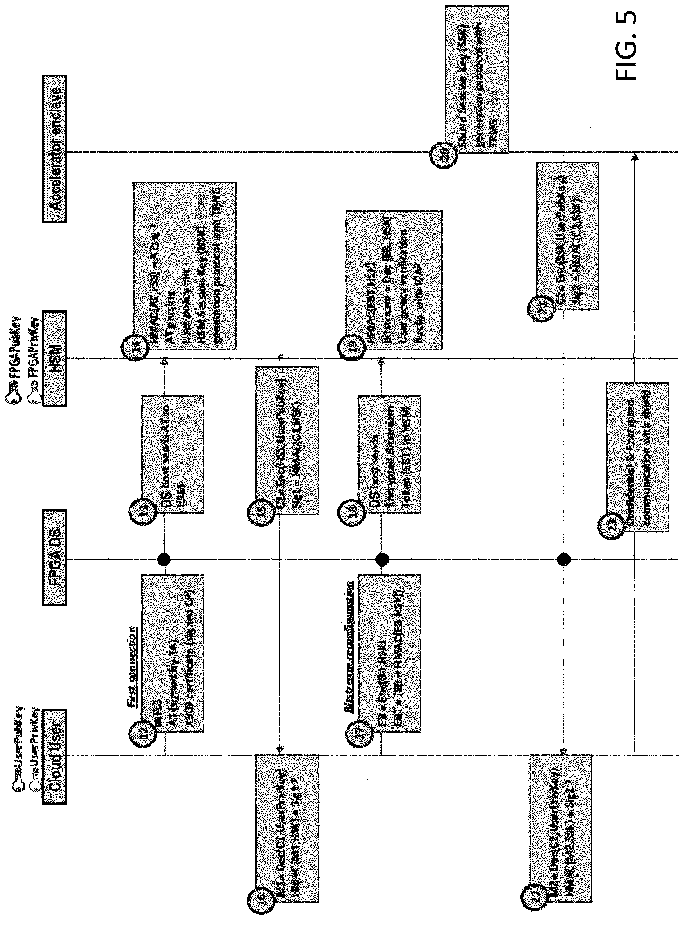

The security protocol disclosed herein includes three main phases that will be described in detail below: a deployment phase A (see FIG. 3), an access generation phase B (see FIG. 4), and a hardware usage phase C (see FIG. 5).

The authentication and access delegation framework for this security protocol involves the target hardware device 200, the cloud provider 250 (e.g. an apparatus 250 of a cloud provider), a deployment server 240 of the target hardware device 200 and a Trusted Authority (TA) 290.

The hardware device 200 includes at least one accelerator 235, integrated into a secure acceleration environment 230, also referred to herein as the accelerator enclave or the secure computing enclave. For an FPGA, the accelerator enclave 230 may be a shielded accelerator enclave and the hardware device 200 corresponds to a FPGA fabric.

The target hardware device 200 further includes a Hardware Security Module (i.e., HSM) 210 according to one or more example embodiments. The HSM 210 is configured to perform access control enforcement and authentication (block 215) of users requesting use of the target hardware device (e.g. FPGA). The block 215 may be configured to perform mutual authentication between the hardware device and a cloud user 220. This HSM 210 can be compared to a trusted platform module (i.e., TPM) where cryptographic functions, random number generations and various security mechanisms are implemented.

The hardware device 200 located in a cloud is managed through a software layer, included in a host device or system 240 referred to herein as the deployment server 240. The deployment server 240 may include various functions for accessing, using, managing the hardware device 200 through the cloud and providing virtualization to the upper layers of the cloud.

The deployment server 240 may host and execute user application(s) 241. Each user application 241 is configured to communicate with the cloud user 220 (e.g. an apparatus 220 of the cloud user). The communications (e.g. data communications) between a user application 241 and the user apparatus 220 are established through a communication port 243 (e.g. Ethernet port) of the deployment server 240 and using a secured link 260, e.g. a tunnel 260 (e.g. a TLS (Transport Layer Security) tunnel). Mutual authentication between the cloud user 220 and the deployment server 240 may be performed before establishing the secured link 260.

The communications (e.g. data communications) between a user application 241 and the hardware device are established through interfaces 242 (HW/SW ITF, hardware and / or software interfaces) between the deployment server 240 and the hardware device 200. These interfaces may include hardware and / or software components. These interfaces may include an AXI bus or a PCIe interface. While these interfaces are represented in FIG. 2 as being external to the deployment server 240 and the hardware device 200, this is only a simplified conceptual view: one or more functions and / or components of these interfaces may be included in the deployment server 240 and/or the hardware device 200.

The TA ensures the identity of cloud users, establishes access control rules and grant access to the hardware device (e.g. FPGA fabric) deployed in the cloud. In the proposed security protocol, the TA 290 is involved with different mechanisms and requirements. In fact, the TA does not need access to the hardware device deployed in the cloud after the deployment of accelerators.

Additionally, both the HSM 210 and the accelerator enclave 230 includes key generation module 211, 231 using a TRNG (True random number generator) for generation of encryption keys.

The encryption keys may be used by the hardware accelerator or respectively the HSM without involving the cloud provider 250. Using a hardware-based protocol independent from the CP creates isolation against other cloud users and protects user data inside the target hardware device (e.g. FPGA). In fact, the cloud provider 250 owns the hardware, the infrastructure and is responsible of the deployment of the target hardware device (e.g. FPGA) in the cloud computing environment. The cloud provider 250 deploys a proprietary hardware shell (including the interfaces 242) to ensure communication and interfaces for the user application 241. This can harm the cloud user's interest by interfering in the HSM and / or hardware acceleration environment. By generating encryption keys inside the hardware accelerator, optimal security and isolation is ensured.

A True Random Number Generator (i.e., TRNG) is a device configured to generate encryption keys. A TRNG may be a logical circuit that exploits the physical randomness of the FPGA semi-conductor to generate random outputs. A TRNG cannot reproduce a specific output intentionally because it is unpredictable. A target hardware device (e.g. FPGA) that includes the TRNG does not need any external source of entropy for the TRNG. The TRNG may be implemented inside the target hardware device (e.g. FPGA), and TRNG can work on its own without any requirement. Existing TRNG solutions have different characteristics like ease of implementation, bandwidth, logical resource consumption.

Concerning the generation of a session key, a TRNG is configured to generate fully random keys. An internal control signal may start the key generation procedure. According to the NIST recommendations, a TRNG output should not be used as is for encryption purposes. Instead, NIST recommends using the TRNG key as a seed to a Deterministic Random Bit Generator (i.e., DRBG). For this reason, the security protocol may include an algorithm to implement NIST recommendations. The DRBG recommended by NIST are based on hash functions. According to NIST, 440 bit of TRNG-generated seed is required to generate a 256-bit symmetric encryption key.

The encryption keys, that are used as session keys (HSK, FSK) and may be created by following the NIST recommendations, are protected with asymmetric encryption (e.g., RSA) inside the hardware device before sending these encryption keys to the cloud user.

Additionally, both the HSM 210 and the accelerator enclave 230 includes encryption blocks 212, 232 for encrypting / decrypting data using encryption keys, generating signatures and/or verifying signatures.

To provide security to the hardware acceleration environment, the TA is responsible of the deployment of a Hardware Security Module (i.e., HSM) for each FPGA. The HSM may be open source since it does not contain any secret.

The security protocol disclosed herein solve threats on hardware accelerators about data confidentiality and protection in O-RAN. They mitigate threats IDs T-HW-01; T-HW-02, T-HW-AAL, T-O-RAN-01, T-O-RAN-02 in O-RAN Working Group 11 (Security Working Group), as defined in O-RAN Security Threat Modeling and Remediation Analysis document [1].

The security protocol will be described in detail the context of its application to a target hardware device that is an FPGA but is applicable to other types of target hardware device deployed in a cloud.

The security protocol disclosed herein achieves a zero-trust online key generation, a zero-trust encrypted channel (represented by the channels CH1, CH2 in FIG. 2) between a cloud user and with a FPGA located in the cloud. In this protocol, asymmetric encryption may be used (e.g., RSA, ECC, etc).

The security protocol will be disclosed step by step by reference to FIGS. 3-5 in which the following encryption keys may be used:
- TAPubKey: public key of the TA 290;
- TAPrivKey: private key of the TA 290;
- CPPubKey: public key of the CP 250;
- CPPrivKey: private key of the CP 250;
- UserPubKey: public key of the User 220;
- UserPrivKey: private key of the User 220;
- FPGAPubKey: public key of the FPGA 200;
- FPGAPrivKey: private key of the FPGA 200.

TAPubKey and TAPrivKey are generated outside of the security protocol by the TA and used and used to generate his own certificate. CPPubKey and CPPrivKey are generated outside of the security protocol by the CP and used to generate his own certificate.

UserPubKey and UserPrivKey are generated outside of the security protocol by the user and used to generate the user's certificate, that will be signed by the CP (during the OAuth2 phase, see step 2, FIG. 4) and verified by the hardware device (see step 14, FIG. 5).

FPGAPubKey and FPGAPrivKey are generated by the TA and used to generate a FPGA certificate that will be signed by the TA (see step 0, FIG. 3) during the deployment phase and verified by the cloud user (see step 12, FIG. 5).

The deployment server of the FPGA is identified in the figures 3 to 5 by "FPGA DS".

FIG. 3 shows a flowchart of a method for deploying a certificate for the target hardware device (here an FPGA). This method corresponds to the deployment phase A of the security protocol. The steps of the method are implemented by the TA, the FPGA DS and the HSM as described below.

While the steps are described in a sequential manner, the person skilled in the art will appreciate that some steps may be omitted, combined, performed in different order and / or in parallel.

To summarize, the deployment phase A is performed offline from the other phases of the security protocol. During the deployment phase A, the TA and the cloud provider do the following:
- The cloud provider deploys FPGA in the cloud using a deployment framework;
- The cloud provider may implement a solution to verify HSM integrity inside the FPGA;
- The TA deploys a certificate for the FPGA;
- The TA deploys the HSM on the FPGA fabric and generate a shared secret FSS;
- The TA stores an FPGA identifier and the FSS for each individual FPGA deployed in the cloud.

Referring to FIG. 3, in step 0, the TA is responsible for the generation and deployment of a certificate for a FPGA device, e.g. during an initialization of the FPGA. The certificate identifies the FPGA and is generated using a pair of keys FPGAPubKey, FPGAPrivKey generated by the TA. The certificate is sent to the FPGA (i.e. in the hardware device 200) and stored in a trusted memory in the FPGA for future access by the FPGA. The certificate is signed by the TA using its private key TAPrivKey and anyone connecting to the FPGA can verify this certificate to ensure the use of a legitimate FPGA endorsed by the TA.

The only time the TA communicates with the FPGA is from step 0.1 to step 0.4 in FIG. 3. In step 0.1, the HSM is deployed by the TA in an HSM-reserved reconfigurable region. To this end, the FPGA, deployed in the cloud by the CP, has communication interfaces 242 that may be used to transmit messages from accelerator to interfaces 242 (and vice-versa) and messages from HSM to interfaces 242 (and vice-versa). Further the TA requests the HSM to generate a secret FSS (FPGA shared secret) to be shared between the TA and the HSM. In step 0.2, the FSS is generated by the HSM, using the TRNG of the HSM, on request of the TA.

The FSS will be used by a security protocol as disclosed herein. The FSS will be used (see step 10, FIG. 4) by the TA to sign the connection information (i.e. the access token, AT) of the user to access the FPGA. The HSM is then configured to use the FSS to verify authenticity and integrity of the connection information (see step 14 in FIG. 5).

After key generation, in step 0.3 the FSS is encrypted using the TA's public key (i.e., TAPubKey) to generate an encrypted key C0=Enc(FSS, TAPubKey) which is itself signed to generate a signature (e.g. HMAC signature) Sig0= HMAC(C0, FSS) used for message integrity and authenticity. Thus the TA can be sure that the FSS is not from a malicious entity. The encrypted key C0 and the signature Sig0 are sent to the TA for verification.

In step 0.4, the TA generates a decrypted key M0=Dec(C0, TAPrivKey) from the encrypted key C0 using the TA private key and verifies the integrity of the signature Sig0 by verifying that HMAC(M0, FSS)=Sig0.

The TA is configured to store, for each FPGA, the FPGA identifier, the FPGA certificate and the shared secret FSS. These data are stored in association for further use. The TA does not need to store much information about one specific FPGA and repeatedly communicate with it.

Further, during the access generation phase B of the security protocol, the TA only communicates with the cloud provider and the cloud user, but not with the FPGA. This allows to involve the TA with minimal security exposure and ensure low latency FPGA accesses during the hardware usage phase C. The processing time of user data is not impacted by this framework and that is a major advantage of using FPGAs in cloud computing. Acceleration resources and software resources are independent and do not affect each other's performances. Additionally, the cloud user can benefit from enhanced isolation against the CP while having no exposure to the TA. The TA is not able to communicate with the FPGA and cannot retrieve sensitive data after the deployment phase (e.g., FSS key initialization).

The HSM can be seen as a part of an FPGA shell for cloud computing. The cloud user is able to verify the HSM integrity through an attestation mechanism (e.g., verify the TA signature of the HSM). Unlike the shell, the HSM is either open source, deployed by another trusted entity or both at the same time. This ensures data confidentiality by establishing trusted and verifiable blocks in the secure hardware computing environment. A hardware security module is more robust than a software solution because it has much less exposure. One cannot communicate or interfere with the computing done inside the HSM unless a physical hardware interface is explicitly implemented for future use. Hardware level attacks are much more difficult to set up and the severity of the attacks are less impactful compared to software vulnerabilities.

The access generation phase B of the security protocol involves an authorization and access token generation framework. This authorization and access token generation framework may be implemented by adapting the OAuth 2 protocol for FPGA and the cloud context.

OAuth 2 is an open standard authorization framework which enables a third party to get limited access to an HTTP service on behalf of the Resource Owner (i.e., cloud provider). Adapting OAuth2.0 to share cloud-based FPGAs instead of credentials allows to authenticate all the cloud users of a given hardware acceleration environment in the cloud. It also provides a token-based low latency access to the cloud-based FPGA. In the security framework disclosed herein, the HSM is responsible of the access token verification and access control enforcement for the FPGA fabric to provide isolation between cloud users.

The access token has three parts: a header, a payload and a signature. The token header may include metadata about the access token like methods and algorithms used for the token creation. The payload may include information about the access given to the cloud user. This information may include: a token validity period, an FPGA ID, a user certificate, a memory allocation size concerning memory allocated inside the accelerator enclave, etc. The signature part of the access token is a message digest or hash of the header and the payload using a signature algorithm (e.g., HMAC). As a signature key for the message digest, the encryption key FSS (generated on step 0.2, that is shared between CP and TA) is used to ensure signature authenticity and allows to bind the access token to the CP.

Additionally, the HSM provides security mechanisms and token-based operations to ensure user data confidentiality and integrity. Involving a TA splits the CP privilege over the cloud deployment. TA is responsible of HSM and security deployments. Using a token-based FPGA access scheme with mutual TLS authentication mechanisms creates isolation and access control.

One can only access an FPGA accelerator if both the TA and the CP gave their authorization (i.e., the access token is signed by the TA, the user certificate is signed by the CP). Consequently, this framework can rely on a TA with acceptable exposure. The CP cannot access the FPGA, as access token signed by the TA is required. The TA also cannot access the FPGA, requiring signed certificate from the CP that TA does not have. The TA and the CP cannot access an FPGA without the knowledge and the consent of the other. This is a major improvement for the use of a TA in an FPGA cloud security framework. Even if the TA is trusted, the security exposure that we have with the CP should not be given to a TA. In this framework, the TA is used by minimizing the exposure towards the client to provide a zero-trust cloud FPGA framework.

FIG. 4 shows a flowchart of a method for access token generation for the target hardware device (here an FPGA). This method corresponds to the access generation phase B of the security protocol. The steps of the method are implemented by the TA, the cloud provider CP and the user as described below.

While the steps are described in a sequential manner, the person skilled in the art will appreciate that some steps may be omitted, combined, performed in different order and / or in parallel.

The deployment phase may be based on the OAuth 2.0 protocol. Another framework or protocol that allows to generate access token for managing access to resources may be used. The OAuth 2.0 is here adapted to a hardware device used in a cloud usage to provide a practical and secure solution.

The deployment phase includes a mutual authentication and access token generation for the cloud user. This allows a low latency token-based access to the cloud-based FPGA. The access token AT is a practical tool to enforce access control and user authentication.

This access generation phase B may be summarized as follows:
- The cloud provider signs the user's certificate, e.g. with its private key;
- The TA generates an access token AT according to access authorizations given by the cloud provider to functional blocks in the accelerator enclave;
- The access token AT is signed by the TA and includes the user's certificate signed by the cloud provider;
- Mutual TLS authentication happens between all entities, i.e. between the TA and the user, between the CP and the user and between the CP and the TA.

From the step 1 to 3, the cloud user sends a hardware resource request (step 1) to the CP and sends the user certificate (e.g., X509 certificate) to be signed. Then, the CP signs the user certificate using its private key CPPrivKey and sends (step 2) the signed user certificate back to the cloud user.

Finally, the CP sends (step 3) authorizations (e.g. a list of authorizations) granted to the cloud user and an identifier of the hardware device to the TA. The CP sends the user's certificate signed by the CP to the cloud user,

From the step 4 through 7, the user's certificate is checked ? and registered by the TA (step 4), the user is redirected (step 5) to the TA by the CP and mutual authentication (e.g. mTLS, happens (step 6) between the user and the TA. For example, when using mTLS, each entity uses its own certificate (pair of public and private key).If the mutual authentication is successful, the TA sends (step 7) an authorization code AC to the user.

In step 8, the user validates the authorizations the user has earned over the hardware accelerator in the hardware device deployed in the cloud. The user sends the authorization code AC to the TA, and mutual authentication happen again in step 9. Then, the TA verifies the authorization code AC, generates an access token AT using the authorizations given by the CP. The access token includes the UserPublicKey, the authorizations and the FPGA public key. The TA generates a signature ATsig = HMAC(AT,FSS) of the access token AT in step 10 using the FSS created in step 0.2 during the deployment phase A (see FIG. 3). This ensures access token integrity and authenticity as the access token AT cannot be generated without the knowledge of the FSS. The access token AT is sent to the user in step 11.

One aspect of this resource sharing process is the signature of the user certificate by the CP in step 2. The TA is the only entity capable to create access tokens but without the signed user certificate from the CP, a cloud user cannot authenticate with the FPGA. Thus, connection will be rejected by the FPGA. Additionally, authorizations given by the CP are linked to authorization codes generated by the TA. The CP can detect fake authorization codes and revoke accesses. For these reasons, the TA cannot create tokens for himself or others to make rogue FPGA accesses.

At this point, the cloud user 220 (e.g. the apparatus 220 of the cloud user) is able to communicate with the FPGA accelerator. As shown in Figure 2, the FPGA is connected to the deployment server 240 via the interfaces 242. To communicate with the FPGA, the cloud user 220 connects to this deployment server 240, e.g. through a secured link 260 over Ethernet.

FIG. 5 shows a flowchart of a method for use of a hardware device (e.g. a FPGA) in a cloud. This method corresponds to the hardware usage phase C of the security protocol. The steps of the method are implemented by a cloud user, a deployment server of the hardware device, a HSM in the hardware device and the accelerator enclave according to any embodiment described herein.

While the steps are described in a sequential manner, the person skilled in the art will appreciate that some steps may be omitted, combined, performed in different order and / or in parallel.

At the first connection to the FPGA of the user, the FPGA configuration and the secure channel establishment are performed. The hardware usage phase C can be summarized as follows:
- The cloud user needs a CP signed user certificate and a TA signed access token AT to communicate with the FPGA;
- The HSM checks the access token AT to initialize user authorization for the FPGA fabric;
- The HSM enforces access control policies for the FPGA logic;
- The HSM generates and online encryption key with the cloud user (i.e., FSS) to establish a first secured communication channel CH1 and protect the confidentiality of the hardware configuration bitstream;
- The functional blocks configured in the accelerator for the user uses a session key as encryption key after configuration of the FPGA to establish a second secured communication channel CH2 with the cloud user, for user data transmission to or from the hardware accelerator.

The session key generation is implemented inside the hardware device (e.g., FPGA): by the HSM for the first secured communication channel CH1 and by the accelerator enclave for the second secured communication channel CH2. The key generation protocol works isolated from any third-party framework to set up a zero-trust encrypted channel (through the secured channels CH1, CH2) with an external module or entity. This allows to protect the data communication with the hardware accelerator against upper layers (e.g., hypervisor, virtual instance). Encryption key is generated in the FPGA fabric by the TRNG, and data communication is encrypted with a specific public key associated to the cloud user requesting the secure channel.

In the security protocol disclosed herein, no secret needs to be stored in hardware accelerators and no trusted third parties needs to be involved in the communication protocol or to set up the secure communication channel. This security protocol is therefore simple, secure, with low latency, and can be considered as zero-trust. Additionally, implementation results show low overhead, suitable for scalable FPGA-based cloud acceleration environments. These mechanisms are adapted to cloud environments where cloud users are volatile. Only few information is stored by the TTP concerning the hardware devices deployed in the cloud environment and the cloud users that are using those devices.

The security protocol disclosed herein is based on a zero-trust key generation and secure channel establishment protocol for hardware-based cloud computing. A zero-trust solution is especially relevant for multi-users environments like O-RAN and FPGA acceleration in public clouds.

Referring to FIG. 5, in step 12, to achieve mutual authentication (e.g. using mTLS) between the cloud user and the hardware device: the hardware device is required to check if the cloud user's certificate is signed by the CP and the cloud user checks if the FPGA certificate is signed by the TA. If the FPGA certificate is valid, the user access token AT is sent by the cloud user to the HSM via the FPGA DS in step 13.

In step 14, mutual authentication between the cloud user and the hardware device is finalized: the hardware device (e.g. block 215 in HSM) receives the user's certificate and checks if the cloud user's certificate is signed by the CP.

If the mutual authentication is successful, the cloud user is authorized to access to the hardware device. To this end, the cloud user's access token AT is verified in the HSM in step 14. First the integrity of the signature ATsig of the access token AT is verified by computing HMAC(AT,FSS) and comparing is with ATsig, the FSS key being used as a signature key. If the token signature and the computed signature match, the HSM parses the payload of the access token to extract authorizations granted to the cloud user and initialize the cloud user's authorizations inside the FPGA fabric.

Then a first secured communication channel CH1 between the cloud user and the HSM is established. The HSM generates a session key (HSM Session Key, designated by HSK) (last part of step 14). The HSK may be generated with the same key generation protocol as the FSS in step 0.2.

In step 15, the HSM encrypts the HSK with the cloud user's public key (i.e., UserPubKey) to generate an encrypted key C 1 = Enc(HSK, UserPubKey) and generates a signature Sig1 of the encrypted key C1 (e.g. using HMAC) such that Sig 1 = HMAC(C1,HSK). Then the HSM sends the encrypted key C1 alongside the signature Sig1 to the cloud user.

On step 16, the cloud user decrypts the encrypted key C1 using his private key by computing M1=Dec(C1, UserPrivKey) and verifies the integrity and authenticity of the signature Sig1, e.g. by computing HMAC(M1, HSK) and comparing the result with Sig1. If the verification is successful, the HSM and the cloud user now share a secret symmetric encryption key HSK that is used as session key. Now the cloud user and the HSM may securely send encrypted data through the first secured communication channel CH1.

The session key HSK may be used by the cloud user in step 17 for encrypting a hardware configuration bitstream Bit and may generate an encrypted hardware configuration bitstream EB=Enc(Bit,HSK) using the HSK obtained in step 16 to achieve confidentiality.

The HSK has been generated inside the HSM with a zero-trust online protocol, the CP and the TA being not aware of such a key. The HSK is encrypted with the cloud user's public key and a signature (e.g. message digest or hash) is computed, e.g. using HMAC. Thus, the HSK cannot be generated or stolen or substituted by another key. This session key HSK is a shared secret between the HSM and the cloud user. The HSM is configured to not leave the hardware configuration bitstream in plaintext and HSM is configured to not be accessible by other modules external to the HSM without a session key.

In step 17, the cloud user sends the encrypted hardware configuration bitstream EB that is encrypted using the session key HSK and an encrypted Bitstream Token (i.e., EBT) to the FPGA. The EBT is a token containing the user hardware configuration bitstream and a signature HMAC(EB,HSK) of the hardware configuration bitstream, to be used for integrity and authenticity verification, this signature being generated using the session key HSK.

The first secured communication channel between the cloud user 220 and the hardware device 200 may be established through the user application 241 hosted in the FPGA DS (more precisely the cloud user 220 communicates with the user application 241 through a secured link 260, e.g. a tunnel 260 (e.g. based on TLS)), such that the user application 241 receives an encrypted hardware configuration bitstream EBT from the cloud user 220 and transfers the encrypted hardware configuration bitstream EBT to the HSM in step 18.

In step 19, the HSM decrypts (e.g. using encryption block 212) the encrypted bitstream EBT using the session key HSK and verifies the signature of the hardware configuration bitstream. If valid, the HSM then checks if the cloud user is authorized to reconfigure the FPGA on the basis of the access token AT received in step 14. User authorization was initialized in step 14 according to the content of the access token AT generated by the TA. If the cloud user is allowed to reconfigure the FPGA, the HSM uses the Internal Configuration Access Port (i.e., ICAP) to reconfigure functional blocks of the accelerator enclave (e.g. the shielded enclave in the FPGA fabric) that are allocated to the cloud user.

Once the FPGA fabric is reconfigured based on the cloud user's hardware configuration bitstream, a second secure, confidential and encrypted channel CH2 is set up (see steps 21-22) between the cloud user and functional blocks in the accelerator enclave to which the user is authorized to access.

To set-up this second channel CH2, an online key generation protocol is used to generate another session key, designated as the Shield Session Key (i.e., SSK) in step 20. The SSK is generated by the TRNG inside the accelerator enclave. The session key SSK is thus generated inside the accelerator enclave (e.g., shielded enclave of the FPGA fabric) and independently from any external entity.

In step 21, the session key SSK is encrypted with the cloud user's public key to generate an encrypted key C2=Enc(SSK,UserPubKey) and a signature of the encrypted key C2 is generated, e.g. by using HMAC by computing the signature Sig2= HMAC(C2, SSK). The encrypted key C2 and signature Sig2 are included in a message sent to the cloud user through the FPGA DS to ensure authenticity and integrity.

In step 22, the cloud user decrypts the encrypted key C2 using his private key UserPrivKey and generates a decrypted key M2= Dec(C2, UserPrivKey). Then the user verifies the integrity and authenticity of the decrypted key M2 by using the signature Sig2, e.g. by using HMAC and comparing it with HMAC(M2,SSK). If the cloud user verifies and validates the SSK integrity and authenticity, the received session key SSK can be used as a symmetric encryption key between the user functional blocks in the accelerator and cloud user to communicate in an encrypted manner through the second secured communication channel CH2. Because the session key SSK has been generated independently from the HSM, the CP and the TA, the cloud user has a private and confidential communication channel CH2 for any further communication and data exchange with functional blocks configured in the accelerator for the cloud user.

The second secured communication channel CH2 may be established with the user application 241 hosted in the FPGA DS, such that the user application 241 receives encrypted input data from the cloud user 220 (e.g. from an apparatus of the cloud user) via the secured link 260 and transfers the encrypted input data to the accelerator enclave for processing. The encrypted input data are decrypted by the accelerator enclave (e.g. by encryption block 232) using the session key SSK and processed by the accelerator 235 (e.g. by the functional blocks configured for the cloud user).

In response, output data may be generated based on the input data by the accelerator 235 (e.g. by the functional blocks configured for the cloud user) and encrypted by the accelerator enclave (e.g. by encryption block 232) using the session key SSK. The accelerator enclave is configured to send the encrypted output data through the second secured communication channel CH2 to the user application 241 hosted in the FPGA DS. The user application 241 is configured to forward the encrypted output data to the cloud user 220 (e.g. to an apparatus of the cloud user) using the secured link 260. The encrypted output data may be decrypted by the cloud user using the session key SSK.

A function of user application 241 is to be an interface (or communication relay) between the accelerator and the cloud user for supporting the establishment of the secured communications channel (CH1, CH2 and secured link 260 through a communication port 243 of the deployment server). Another function of the user application 241 is to execute the software code specific to the user (e.g. in PaaS mode or IaaS mode).

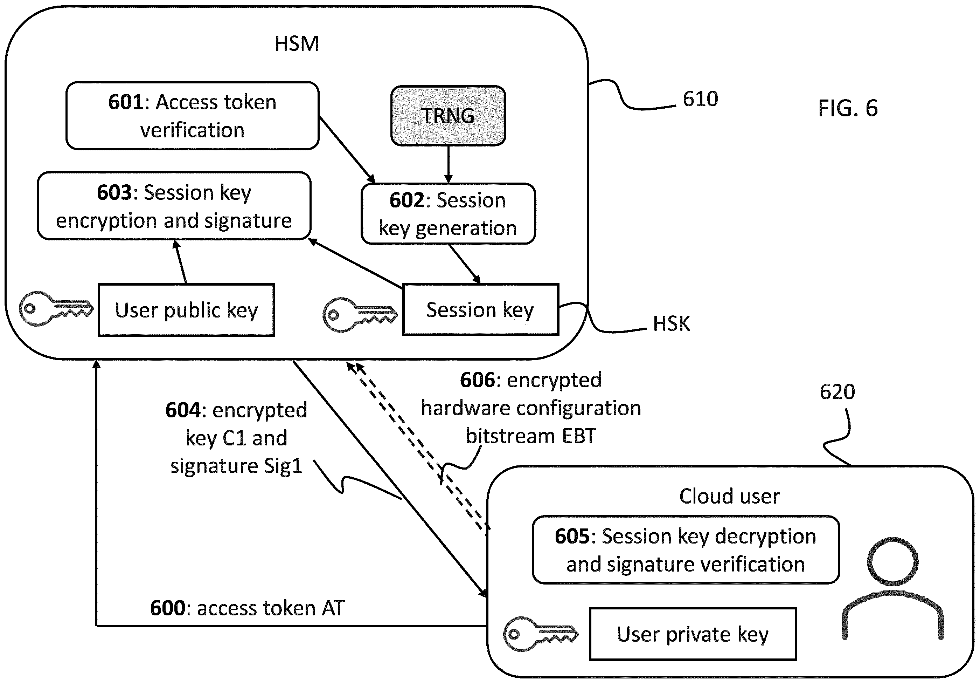

As represented in FIG. 6, the phase C of the security protocol with zero-trust encryption key generation may include the following steps between an HSM and a cloud user.

It is used inside the HSM and inside the accelerator (by functional blocks configured in the accelerator for the cloud user) in the framework presented above. The key generation protocol does not need the OAuth 2.0 framework for cloud-based FPGA, an access token, or any other specific framework or environment to work. The implementation and the logic of the proposal is described below.

In step 600, the cloud user sends the access token AT to the HSM and a signature of the access token.

In step 601, the integrity of the access token AT is verified based on the signature.

In step 602 the session key HSK for the first secure communication channel CH1 is generated using the TRNG.

In step 603, the session key HSK is encrypted and signed.

In step 604, the encrypted session key HSK and its signature are sent to the concerned cloud user 620.

The distribution of the user public key (that will be used to encrypt the HSK and SSK) to the FPGA can either be executed by the cloud user 220 through the secured link 260 or the public key can be embedded inside the user application 241 and sent to the FPGA via the interfaces 242.

Public and private keys of the FPGA are securely generated and deployed by the TA but not the cloud provider. The public and private keys of the FPGA are stored in the hardware device 200 (e.g. in the HSM) to prevent any unnecessary access and establish isolation from the cloud provider.

The encrypted session key HSK is sent with a signature of the encryption key of the cloud user to ensure encryption key integrity in step 604. The signature may be computed using a hash function like SHA-256 and is calculated inside the shielded enclave of the FPGA fabric. For higher levels of security SHA-384 and SHA-512 algorithms can also be implemented. However, the overhead of hardware resource usage and latency will be higher.

Upon receiving the message with the session key HSK and its signature, the cloud user is configured to use in step 605 its private key to decrypt the encrypted session key received by the FPGA. Then, the cloud user is configured to verify the signature of the encryption key. To verify the session key integrity, the cloud user is configured to implement the same hash algorithm that is used inside the HSM.

The verification of the integrity of the signature and the session key decryption are executed without exposing the data and the results to the cloud provider. If the verification is executed in the deployment server, enclave technologies like ARM TrustZone or Intel SGX may be used to ensure data protection against the cloud provider. However, software enclaves still have vulnerabilities. Hardware computing is still considered more secure thanks to the lack of a runtime environment which reduces the attack vectors. If the verification is executed inside a hardware accelerator (e.g., FPGA), the data is secured by keeping the sensitive information inside the FPGA fabric without being exposed to external interfaces.

If the key signature verification is successful, the HSM and the cloud user have established a zero-trust confidential channel CH1 that can be used for transmission of hardware configuration bitstream(s).

Any further communication will be encrypted using symmetric encryption and isolated from the cloud provider.

A symmetric encryption algorithm (e.g., AES) may be implemented inside the FPGA to enable zero-trust confidential encrypted communication. The cloud user is configured to also have corresponding AES capability to securely communicate with the hardware accelerator. The session key HSK may be renegotiated either periodically or on demand to add another layer of security.

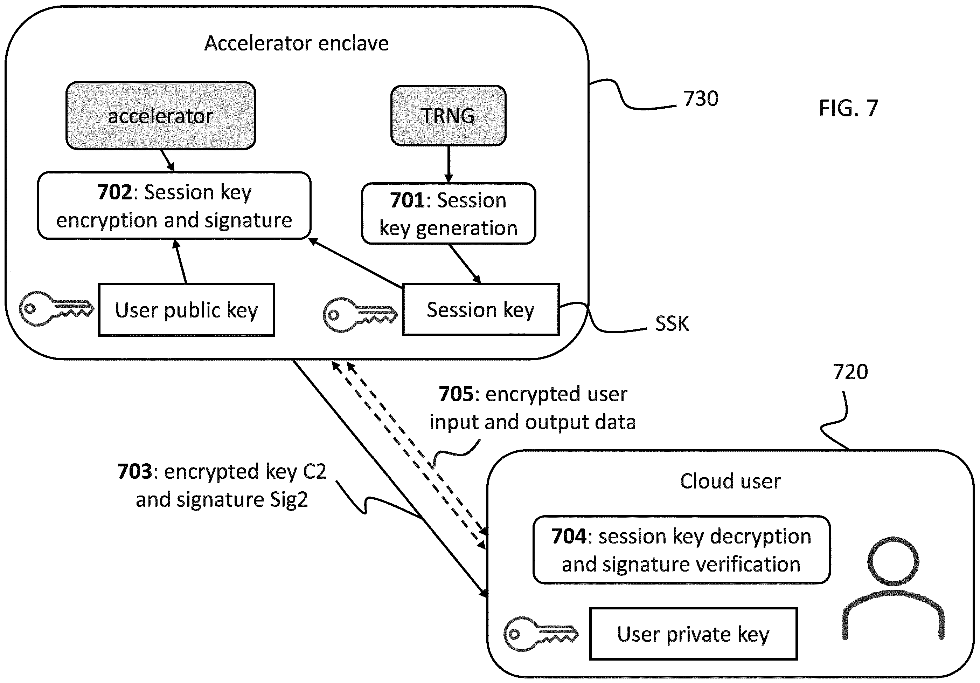

As represented in FIG. 7, the phase C of the security protocol with zero-trust encryption key generation may include the following steps between an accelerator enclave and a cloud user.

In step 701 the session key SSK for the second secure communication channel CH2 is generated using a TRNG.

At the end of step 701, the session key SSK may be stored inside an enclave memory. An enclave memory is a type a memory with strict access control policy. This enclave memory is only written by a NIST compliant block and read by the encryption function. No other block can access this enclave memory.

In step 702, the session key SSK is encrypted and signed.

In step 703, the encrypted session key SSK and its signature are sent to the concerned cloud user 620.

Upon receiving the message with the session key SSK and its signature, the cloud user is configured to use in step 704 its private key to decrypt the encrypted session key. Then, the cloud user is configured to verify the signature of the session key.

If the key signature verification is successful, the accelerator enclave and the cloud user have established a zero-trust confidential channel CH2 that can be used for transmission (step 705) of encrypted input data to be processed by the accelerator, where the session key SSK is used as encryption key.

The session key SSK may be renegotiated either periodically or on demand to add another layer of security.

The algorithms that may be used for the security protocol includes
- A TRNG to generate a seed (step 601);
- A session key generator (e.g. an implementation of NIST recommendations) in the HSM of the hardware device to produce (step 602) the session key from the seed;
- A public key cryptography algorithm (e.g., RSA, ECC) to encrypt the session key with the cloud user's public key (steps 603, 604, 605) and decrypt the encrypted key with the cloud user's private key ;

- A message digest function (e.g., HMAC) for key integrity and authenticity (step 605);
- A symmetric key algorithm (e.g., AES) to securely communicated with the cloud user using the session key SSK;
- A public key sharing mechanism (e.g., embedding or public key sharing).

These algorithms are implemented by the cloud user independently from the cloud provider to benefit from the security protocol.

To summarize, the below advantages are achieved par the security protocol disclosed herein:
- Data confidentiality between a hardware device (e.g. FPGA) located in a multi-users cloud and any user communicating entity (e.g., NIC card, any specific module in the cloud, user equipment, other type of stakeholder, etc.) is achieved.
- The security protocol generates low latency and low overhead and offers good scalability for accelerated cloud computing using FPGA or other hardware devices.
- Encryption keys are generated by the hardware device (e.g. FPGA) itself instead of embedding them inside the hardware accelerator.
- A zero-trust, confidential, and encrypted channel is set up between the cloud accelerator and a cloud user without involving the cloud provider.

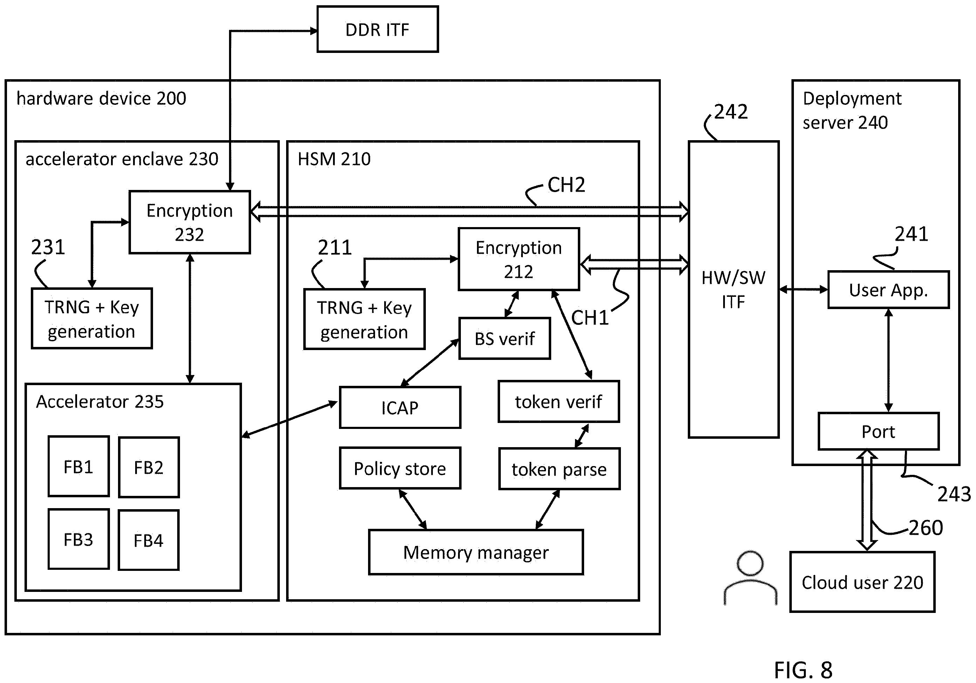

FIG. 8 shows a software/hardware architecture of a target hardware device (e.g. FPGA) 200 deployed in a cloud.

Compared to FIG. 2, additional blocks are shown including:
- A block "token parse" configured to parse an access token to extract the authorizations granted to a user for accessing to functional blocks in the accelerator (e.g. identification of the functional blocks to which access is granted) and to initialize a user policy based on the authorizations; and "token verif" blocks;
- A block "token verif" configured to verify the integrity of an access token on the basis of a signature of the access token;
- A block "ICAP" (Internal Configuration Access Port): this is a hardware block that receives a hardware configuration bitstream as input and enables functional blocks of the accelerator in the hardware device to be configured based on the hardware configuration bitstream;
- A block "BS verif' configured to decrypt an encrypted hardware configuration bitstream and verify the integrity of the hardware configuration bitstream based on a signature of the encrypted hardware configuration, before using the hardware configuration bitstream for accelerator configuration via the ICAP block;
- A block "policy store" is a hardware block that stores policy information need to perform access control to the accelerator; the policy store is used to store authorizations granted to a user;
- A block "memory manager" that receives the memory authorizations contained in the access token (the information is read by the "token parse" block); the "memory manager" block determines a random memory address and reserves a memory size (based on the information read from the access token) for a given user;
- A block "DDR ITF" (DDR interface): this is an interface that the accelerator accesses through the HSM to communicate with RAM memory that may be available on the FPGA device or the deployment server; this is an interface for communicating with the RAM memory.

Further, for illustration purposes, FIG. 8 shows a plurality of functional blocks FB1, FB2, FB3, FB4 that may be respectively allocated to a user (one functional block being usually allocated to only one user).

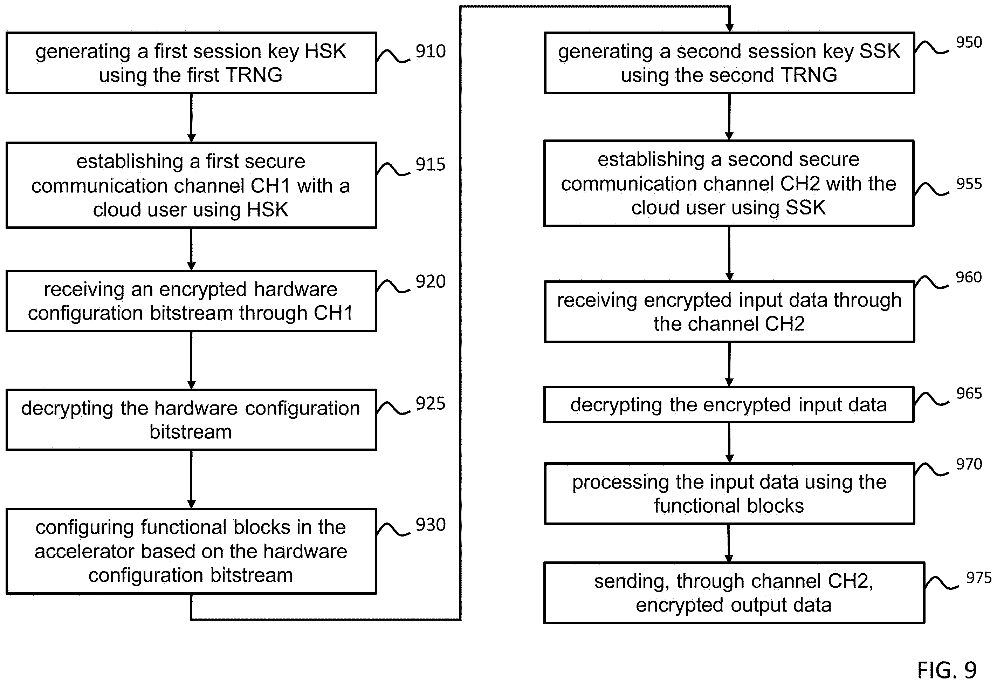

FIG. 9 shows a flowchart of a method for implementing a security protocol according to one or more example embodiments. The steps of the method may be implemented by hardware device 200 according to any example described herein.

The hardware device may include an accelerator enclave 230 and a hardware security module, HSM 210, the HSM including a first TRNG. The accelerator enclave may include a second TRNG and at least one hardware accelerator 235.

While the steps are described in a sequential manner, the person skilled in the art will appreciate that some steps may be omitted, combined, performed in different order and / or in parallel.

In step 910, the HSM generates a first session key (HSK) using the first TRNG.

In step 915, the HSM establishes a first secure communication channel (CH1) with a cloud user using the first session key as encryption key.

To establish the first secure communication channel, the HSM may be configured to:
- encrypt the first session key with a public key associated with the cloud user to generate a first encrypted key;
- generate a first signature of the first encrypted key;
- send the first encrypted key and the first signature to the cloud user.

In step 920, the HSM receives an encrypted hardware configuration bitstream through the first secure communication channel.

In step 925, the HSM decrypts the hardware configuration bitstream.

In step 930, the HSM configures functional blocks in the accelerator based on the hardware configuration bitstream.

In step 950, the accelerator enclave generates a second session key (SSK) using the second TRNG.

In step 955, the accelerator enclave establishes a second secure communication channel (CH2) with the cloud user using the second session key as encryption key.

To establish the second secure communication channel, the accelerator enclave may be configured to:
- encrypt the second session key with the public key associated with the cloud user to generate a second encrypted key;
- generate a second signature of the second encrypted key;
- send the second encrypted key and the second signature to the cloud user.

In step 960, the accelerator enclave receives encrypted input data through the second secure communication channel.

In step 965, the accelerator enclave decrypts the encrypted input data;

In step 970, the accelerator enclave processes the input data using the functional blocks.

In step 975, the accelerator enclave sends, through the second secure communication channel, encrypted output data generated by the functional blocks based on the encrypted input data.

The HSM may further be configured to perform one or more steps among these steps:
- receive an encrypted access token defining authorizations granted by a cloud provider to the cloud user with respect to the functional blocks in the accelerator;
- decrypt the encrypted access token; and
- initialize the functional blocks based on the authorizations defined in the access token.

The hardware device may be configured to perform other steps and / or functions described herein for a hardware device (e.g. FPGA).

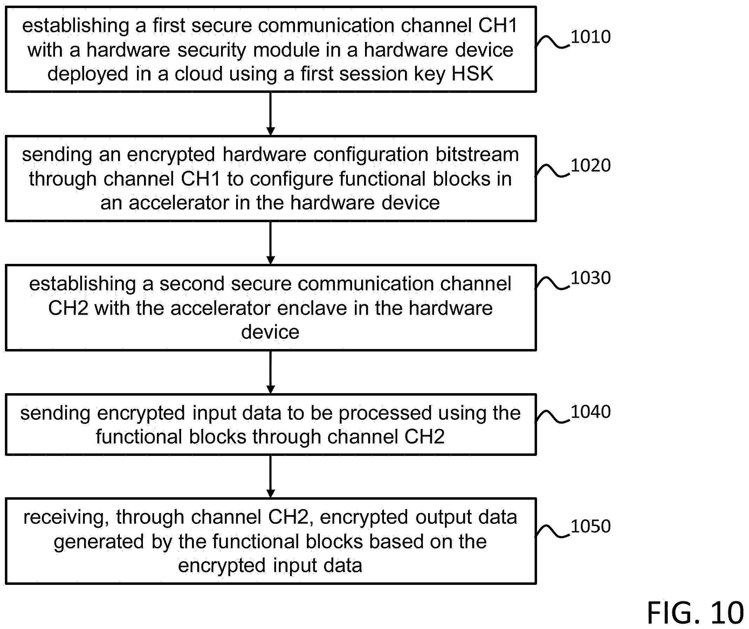

FIG. 10 shows a flowchart of a method for implementing a security protocol according to one or more example embodiments. The steps of the method may be implemented by an apparatus 220 for use by a cloud user according to any example described herein.

While the steps are described in a sequential manner, the person skilled in the art will appreciate that some steps may be omitted, combined, performed in different order and / or in parallel.

In step 1010, the apparatus 220 establishes a first secure communication channel with a hardware security module in a hardware device in a cloud using a first session key as encryption key.

Establishing the first secure communication may comprise one or more steps among these steps:
- receiving a first encrypted key encrypting the first session key and a first signature of the first encrypted key;
- decrypting the first encrypted key using a private key associated with the cloud user to obtain the first session key;
- verifying the first signature using the decrypted first session key.

In step 1020, the apparatus 220 sends an encrypted hardware configuration bitstream through the first secure communication channel, the hardware configuration bitstream being adapted to configure functional blocks in one or more accelerators in an accelerator enclave in the hardware device;

In step 1030, the apparatus 220 establishes a second secure communication channel with the accelerator enclave in the hardware device;

Establishing the second secure communication may comprise one or more steps among these steps:
- receiving a second encrypted key encrypting the second session key and a second signature of the second encrypted key;
- decrypting the second encrypted key using a private key associated with the cloud user to obtain the second session key;
- verifying the second signature using the decrypted second session key.

In step 1040, the apparatus 220 sends encrypted input data to be processed using the functional blocks through the second secure communication channel.

In step 1050, the apparatus 220 receives, through the second secure communication channel, encrypted output data generated by the functional blocks based on the encrypted input data.

The apparatus 220 may further perform a mutual authentication with the hardware device, wherein the first secure communication channel is established if the mutual authentication with the hardware device is successful.

The apparatus 220 may further send to the hardware security module an encrypted access token defining authorizations granted to the cloud user with respect to the functional blocks in the accelerator.

The apparatus 220 may further send to a cloud provider a certificate of the cloud user and a request for hardware resources and receive the certificate signed by the cloud provider;

The apparatus 220 may further perform a mutual authentication with the trusted authority.

The apparatus 220 may further receive the access token from the trusted authority and a signature of the access token generated by the trusted authority using a secret (FSS) shared between the trusted authority and the hardware security module of the hardware device. The access token may include the public key of the cloud user, the authorizations granted by the cloud provider to the cloud user and a public key of the hardware device.

The apparatus 220 for use by the cloud user may be configured to perform other steps and / or functions described herein for the cloud user 220.

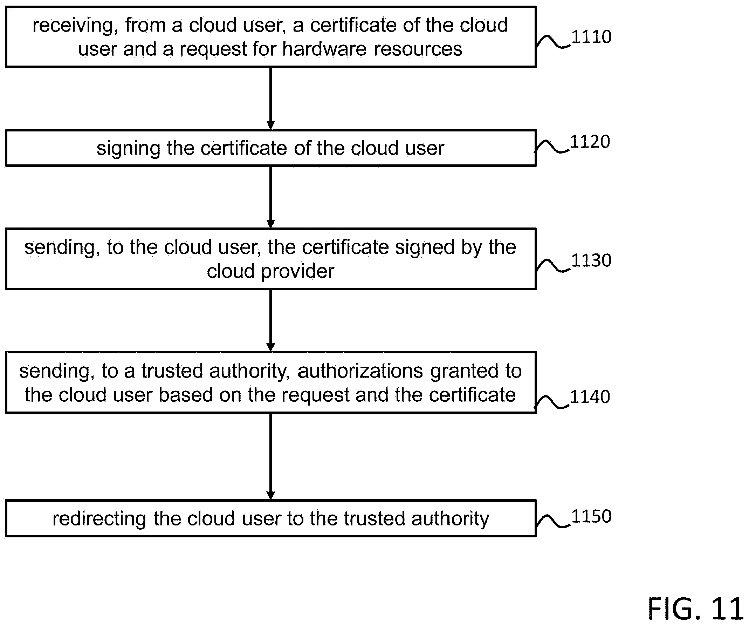

FIG. 11 shows a flowchart of a method for implementing a security protocol according to one or more example embodiments. The steps of the method may be implemented by an apparatus 250 for use by a cloud provider 250 according to any example described herein.

While the steps are described in a sequential manner, the person skilled in the art will appreciate that some steps may be omitted, combined, performed in different order and / or in parallel.

In step 1110, the apparatus 250 receives, from a cloud user, a certificate of the cloud user and a request for hardware resources.

In step 1120, the apparatus 250 signs the received certificate.

In step 1130, the apparatus 250 sends, to the cloud user, the certificate signed by the cloud provider.

In step 1140, the apparatus 250 sends, to a trusted authority, authorizations granted to the cloud user based on the request and the certificate signed by the cloud provider.

In step 1150, the apparatus 250 redirects the cloud user to the trusted authority.
The apparatus 250 for use by the cloud provider may be configured to perform other steps and / or functions described herein for the cloud provider 250.

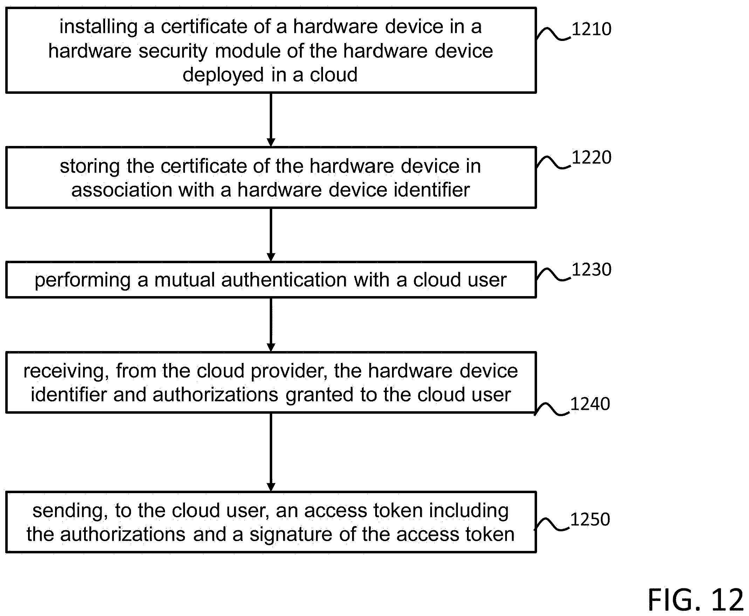

FIG. 12 shows a flowchart of a method for implementing a security protocol according to one or more example embodiments. The steps of the method may be implemented by an apparatus 290 for use by a trusted authority 290 according to any example described herein.

While the steps are described in a sequential manner, the person skilled in the art will appreciate that some steps may be omitted, combined, performed in different order and / or in parallel.

In step 1210, the apparatus 290 installs a certificate of a hardware device in a hardware security module of the hardware device, wherein the hardware device is deployed in a cloud managed by a cloud provider.

In step 1220, the apparatus 290 stores the certificate of the hardware device in association with a hardware device identifier.

In step 1230, the apparatus 290 performs a mutual authentication with a cloud user.

In step 1240, the apparatus 290 receives, from the cloud provider, the hardware device identifier and authorizations granted to the cloud user.

In step 1250, the apparatus 290 sends, to the cloud user, an access token including the authorizations and a signature of the access token generated by the trusted authority using a secret FSS shared between the trusted authority and the hardware security module of the hardware device.

The apparatus 290 for use by the trusted authority may be configured to perform other steps and / or functions described herein for the trusted authority 290.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe operations as a sequential process, many of the operations may be performed in parallel, concurrently or simultaneously. Also some operations may be omitted, combined or performed in different order. A process may be terminated when its operations are completed but may also have additional steps not disclosed in the figure or description. A process may correspond to a method, function, procedure, subroutine, subprogram, etc. When a process corresponds to a function, its termination may correspond to a return of the function to the calling function or the main function.

Each described function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not included in a host device or host system. The instructions may be transmitted over the computer-readable medium and be loaded onto the host device or host system. The instructions are configured to cause the host device or host system to perform one or more functions disclosed herein. For example, as mentioned above, according to one or more examples, at least one memory may include or store instructions, the at least one memory and the instructions may be configured to, with at least one processor, cause the host device or host system to perform the one or more functions. Additionally, the processor, memory and instructions, serve as means for providing or causing performance by the host device or host system of one or more functions disclosed herein.

The host device or host system may be a general-purpose computer and / or computing system, a special purpose computer and / or computing system, a programmable processing apparatus and / or system, a machine, etc. The host device or host system may be or include or be part of: a user equipment, client device, mobile phone, laptop, computer, network element, data server, network resource controller, network apparatus, router, gateway, network node, computer, cloud-based server, web server, application server, proxy server, etc.

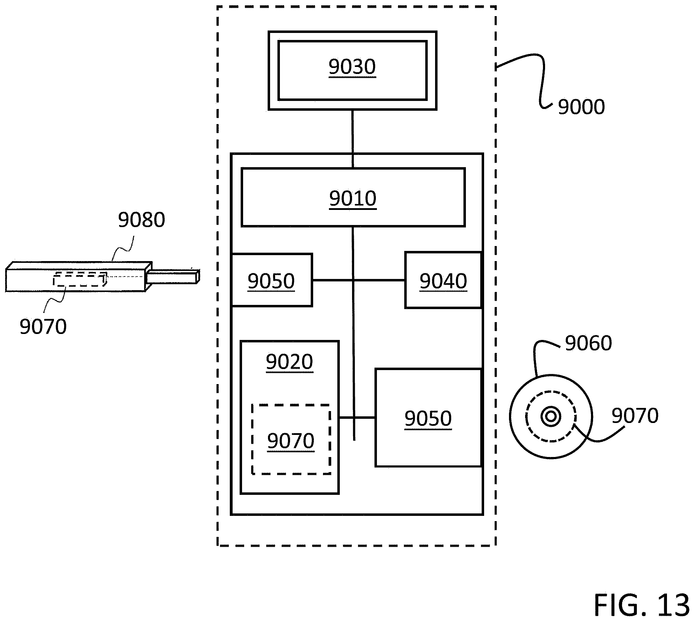

FIG. 13 illustrates an example embodiment of an apparatus 9000.

The apparatus 9000 may be used for performing one or more or all steps of a method disclosed herein. The apparatus 9000 may be an apparatus used for performing one or more steps and / or functions disclosed herein for a Trusted Authority, or respectively for a cloud user, or respectively for a cloud provider.

As represented schematically in this figure, the apparatus 9000 may include at least one processor 9010 and at least one memory 9020. The apparatus 9000 may include one or more communication interfaces 9040 (e.g. network interfaces for access to a wired / wireless network, including Ethernet interface, WIFI interface, etc) connected to the processor and configured to communicate via wired / non wired communication link(s). The apparatus 9000 may include user interfaces 9030 (e.g. keyboard, mouse, display screen, etc) connected with the processor. The apparatus 9000 may further include one or more media drives 9050 for reading a computer-readable storage medium (e.g. digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic. Other hardware, conventional or custom, may also be included. A processor or processing circuit may be configured to execute instructions adapted for causing the host device or host system to perform one or more functions disclosed herein for the host device or host system.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc. The means may include at least one processor and at least one memory including computer program code, wherein the at least one memory and the computer program code are configured to, with the at least one processor, cause an apparatus or system to perform the concerned function(s).

As used in this application, the term "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

### CITED REFERENCES

[1] O-RAN Working Group 11 (Security Working Group). O-RAN Security Threat Modeling and Remediation Analysis
[2] O-RAN Working Group 11 (Security Working Group) Security Requirements Specifications v5.0

**LIST OF MAIN ABBREVIATIONS**

| | |
|---|---|
| AI | Artificial Intelligence |
| ASIC | Application-Specific Integrated Circuit |
| CNF | Containerized Network Function |
| CP | Cloud Provider |
| CPU | Central Processing Unit |
| DRBG | Deterministic random bit generator |
| FPGA | Field programmable gate array |
| GPU | Graphical Processing Unit |
| L1 | Layer 1 (physical layer) of 5G protocol stack |
| ML | Machine Learning |
| NIC | Network interface card |
| NIST | National institute of standard & technology |
| O-Cloud | Open Cloud |
| O-RAN | Open radio access network |
| RAN | Radio Access Network |
| TRNG | True random number generator |
| TTP | Trusted Third Party |
| VNF | Virtual Network Function |

## Claims

1. A hardware device (200) comprising an accelerator enclave (230) and a hardware security module (210), HSM, the HSM (210) including a first true random number generator, TRNG (211); the accelerator enclave (230) including a second TRNG (231) and at least one accelerator (235);
the HSM (210) being configured to:
generate, based on a request from a trusted authority (290), a shared secret, FSS, using the first TRNG (211);
send the shared secret, FSS, to the trusted authority (290);
receive an encrypted access token signed by the trusted authority (290), wherein the access token is signed using the shared secret, FSS, the encrypted access token defining authorizations granted by a cloud provider (250) to a cloud user with respect to the functional blocks in the at least one accelerator (235);
decrypt the encrypted access token;
verify authenticity and integrity of the access token using the shared secret, FSS;
initialize functional blocks based on the authorizations defined in the access token;
receive a user certificate signed by the cloud provider (250);
generate a first session key using the first TRNG (211);
establish a first secure communication channel (CH1) with the cloud user (220) using the first session key as encryption key;
receive an encrypted hardware configuration bitstream through the first secure communication channel (CH1);
decrypt the hardware configuration bitstream;
configure the functional blocks in the at least one accelerator (235) based on the hardware configuration bitstream;
the accelerator (235) enclave being configured to:
generate a second session key using the second TRNG (231);
establish a second secure communication channel (CH2) with the cloud user (220) using the second session key as encryption key;
receive encrypted input data through the second secure communication channel (CH2);
decrypt the encrypted input data;
process the input data using the functional blocks;
send, through the second secure communication channel (CH2), encrypted output data generated by the functional blocks based on the encrypted input data.

2. The hardware device (200) of claim 1, wherein to establish the first secure communication channel (CH1) the HSM (210) is configured to:
encrypt the first session key with a public key associated with the cloud user (220) to generate a first encrypted key;
generate a first signature of the first encrypted key;
send the first encrypted key and the first signature to the cloud user (220).

3. The hardware device of claim 1 or 2, wherein to establish the second secure communication channel (CH2) the accelerator enclave (230) is configured to:
encrypt the second session key with the public key associated with the cloud user (220) to generate a second encrypted key;
generate a second signature of the second encrypted key;
send the second encrypted key and the second signature to the cloud user (220).

4. An apparatus for use by a cloud user (220), the apparatus comprising means for performing a method comprising:
sending to a cloud provider (250) a certificate of the cloud user and a request for hardware resources;
receiving the certificate signed by the cloud provider (250);
performing a mutual authentication with a trusted authority (290);
receiving the access token from the trusted authority and a signature of the access token generated by the trusted authority (290) using a secret shared between the trusted authority (290) and a hardware security module (210) of a hardware device (200);
sending to the hardware security module (210) an encrypted access token defining authorizations granted to the cloud user (220) with respect to the functional blocks in at least one accelerator (235);
sending to the hardware security module (210) the certificate signed by the cloud provider (250);
establishing, based on the access token and certificate, a first secure communication channel (CH1) with the hardware security module (210) in the hardware device using a first session key as encryption key;
sending an encrypted hardware configuration bitstream through the first secure communication channel (CH1), the hardware configuration bitstream being adapted to configure functional blocks in the at least one accelerator in the accelerator enclave (230) in the hardware device (200);
establishing a second secure communication channel with the accelerator enclave in the hardware device;
sending encrypted input data to be processed using the functional blocks through the second secure communication channel (CH2);
receiving, through the second secure communication channel (CH2), encrypted output data generated by the functional blocks based on the encrypted input data.

5. The apparatus of claim 4, wherein the method further comprises:
performing a mutual authentication with the hardware device (200), wherein the first secure communication channel (CH1) is established if the mutual authentication with the hardware device (200) is successful.

6. The apparatus of claim 4 or 5, wherein the access token includes the public key of the cloud user (220), the authorizations granted by the cloud provider (250) to the cloud user (220) and a public key of the hardware device (200).

7. The apparatus of claim 4 to 6, wherein establishing the first secure communication comprises:
receiving a first encrypted key encrypting the first session key and a first signature of the first encrypted key;
decrypting the first encrypted key using a private key associated with the cloud user to obtain the first session key;
verifying the first signature using the decrypted first session key.

8. The apparatus of claim 4 to 7, wherein establishing the second secure communication comprises:
receiving a second encrypted key encrypting the second session key and a second signature of the second encrypted key;
decrypting the second encrypted key using a private key associated with the cloud user to obtain the second session key;
verifying the second signature using the decrypted second session key.

9. An apparatus of a cloud provider, comprising means for performing a method comprising:
receiving, from a cloud user, a certificate of the cloud user (220) and a request for hardware resources;
signing the certificate of the cloud user (220);
sending, to the cloud user (220), the certificate signed by the cloud provider (250);
sending, to a trusted authority (290), authorizations granted to the cloud user (220) based on the request and the certificate signed by the cloud provider (250);
redirecting the cloud user (220) to the trusted authority (290).

10. An apparatus for use by a trusted authority (290), the apparatus comprising means for performing a method comprising:
sending a request to a hardware device (200) to provide a shared secret, FSS;
receiving the shared secret, FSS, from the hardware device (200);
installing a certificate of the hardware device (200) in a hardware security module (210) of the hardware device (200), wherein the hardware device (200) is deployed in a cloud managed by a cloud provider (250);
storing the certificate of the hardware device (200) in association with a hardware device identifier;
performing a mutual authentication with a cloud user (220);
receiving, from the cloud provider (250), the hardware device identifier and authorizations granted to the cloud user (220);
sending, to the cloud user (220), an access token including the authorizations and a signature of the access token generated by the trusted authority (290) using the shared secret, FSS, shared between the trusted authority (290) and the hardware security module (210) of the hardware device (200).

11. A method for use by a cloud user (220), the method comprising:
sending to a cloud provider (250) a certificate of the cloud user and a request for hardware resources;
receiving the certificate signed by the cloud provider (250);
performing a mutual authentication with a trusted authority (290);
receiving the access token from the trusted authority and a signature of the access token generated by the trusted authority (290) using a secret shared between the trusted authority (290) and a hardware security module (210) of a hardware device (200); sending to the hardware security module (210) an encrypted access token defining authorizations granted to the cloud user (220) with respect to the functional blocks in at least one accelerator (235);
sending to the hardware security module (210) the certificate signed by the cloud provider (250);
establishing, based on the access token and certificate, a first secure communication channel (CH1) with the hardware security module (210) in the hardware device using a first session key as encryption key;
sending an encrypted hardware configuration bitstream through the first secure communication channel (CH1), the hardware configuration bitstream being adapted to configure functional blocks in the at least one accelerator in the accelerator enclave (230) in the hardware device (200);
establishing a second secure communication channel with the accelerator enclave in the hardware device;
sending encrypted input data to be processed using the functional blocks through the second secure communication channel (CH2);
receiving, through the second secure communication channel (CH2), encrypted output data generated by the functional blocks based on the encrypted input data.

12. The method of claim 11 further comprising:
performing a mutual authentication with the hardware device (200), wherein the first secure communication channel (CH1) is established if the mutual authentication with the hardware device (200) is successful.

13. A method of a cloud provider, the method comprising:
receiving, from a cloud user, a certificate of the cloud user (220) and a request for hardware resources;
signing the certificate of the cloud user (220);
sending, to the cloud user (220), the certificate signed by the cloud provider (250);
sending, to a trusted authority (290), authorizations granted to the cloud user (220) based on the request and the certificate signed by the cloud provider (250);
redirecting the cloud user (220) to the trusted authority (290).

14. A method for use by a trusted authority (290), the method comprising:
sending a request to a hardware device (200) to provide a shared secret, FSS;
receiving the shared secret, FSS, from the hardware device (200);
installing a certificate of the hardware device (200) in a hardware security module (210) of the hardware device (200), wherein the hardware device (200) is deployed in a cloud managed by a cloud provider (250);
storing the certificate of the hardware device (200) in association with a hardware device identifier;
performing a mutual authentication with a cloud user (220);
receiving, from the cloud provider (250), the hardware device identifier and authorizations granted to the cloud user (220);
sending, to the cloud user (220), an access token including the authorizations and a signature of the access token generated by the trusted authority (290) using the shared secret, FSS, shared between the trusted authority (290) and the hardware security module (210) of the hardware device (200).
